# EUROPEAN PATENT APPLICATION

(11) **EP 4 445 812 A1**
(43) Date of publication of application: **16.10.2024**
(21) Application number: 22904360.9
(22) Date of filing: 07.06.2022
(51) Int. Cl.: A47J 37/06, A47J 37/10, H05B 6/12, H05B 6/06

(54) **DOUBLE-SIDED INDUCTION RANGE SYSTEM**

(30) Priority: 10.12.2021 KR 20210176245
(71) Applicant: Peaceworld.Co., Ltd, Hanam-si, Gyeonggi-do 13026 (KR)
(72) Inventor: LEE, Myung Ock, Seongnam-si, Gyeonggi-do 13643 (KR); KIM, Sang Woo, Seongnam-si, Gyeonggi-do 13643 (KR)
(74) Representative: Frenkel, Matthias Alexander
(86) International application number: PCT/KR2022/007965
(87) International publication number: WO 2023/106521

(57) **Abstract**

A double-sided induction range system includes a main body portion, a first induction unit coupled to the main body portion to be hingedly rotatable and heating one side of a double-sided pan for induction by inducing a magnetic field through a first inner side, a second induction unit coupled to the main body portion to be hingedly rotatable and heating the other side of the double-sided pan by inducing a magnetic field through a second inner side, an oil collection bin received inside the main body portion and collecting moisture and oil discharged from the double-sided pan during cooking, and a single control unit electrically connected to each of the first induction unit and the second induction unit.

## Description

### [TECHNICAL FIELD]

The present invention relates to an induction range, and more specifically, to a double-sided induction range system that can simultaneously heat both sides of a double-sided pan comprising a lower pan and an upper pan packed with the lower pan.

### [BACKGROUND ART]

As a heating device for cooking food, microwave ovens, gas stoves, ovens, and the like have been used. However, use of induction ranges has been increasing in recent years due to problems, such as indoor air pollution and increased indoor temperature. An induction range is a heating cooking device which adopts an induction heating method and has considerable advantages in terms of high energy efficiency and stability. Moreover, the induction range possesses advantages in that the induction range does not consume oxygen and emit waste gas. Meanwhile, since a range of magnetic field from the induction range is relatively small, the induction range is used by placing a designated container directly on top of the induction stove itself.

Recently, the number of home cooking has increased as an aftermath of COVID-19. However, a strong odor or smoke is generated when fish or meat is broiled using a single-sided frying pan or the like. In this respect, a double-sided frying pan has been developed, in which a lower pan and an upper pan are opened or closed by hinge rotation and are sealingly connected in a closed state of the double-sided frying pan. Followed by wide spread of the induction ranges, double-sided induction pans have been developed and are being distributed.

However, as the induction range uses the induction heating method utilizing magnetic field, the induction range may be arranged in various ways. Accordingly, when a double-sided induction pan is used, it is necessary to develop an induction range which can simultaneously heat both sides of the double-sided pan to reduce cooking time. Also, when the double-sided induction pan is used, there is a need to develop an induction range that may help with consistent cooking by storing in advance cooking conditions, such as heating intensity, heating time, or the like, depending on materials to be cooked.

### [Detailed Description of the Invention]

### [Technical Tasks]

Embodiments of the present invention have been invented to solve the problems described above and are aimed to provide a double-sided induction range system which may reduce cooking time by simultaneously heating both sides of a double-sided induction pan.

Also, the present invention is to provide a double-sided induction range system which may adjust an arrangement direction of a double-sided induction pan dependent on cooking materials.

Furthermore, the present invention is to provide a double-sided induction range system which facilitates maintenance and management by collecting moisture and oil discharged from a double-sided induction pan.

Additionally, the present invention is to provide a double-sided induction range system which automatically controls a heating intensity or the like by providing a recipe for each cooking material such that even cooking is ensured for each cooking material.

### [Technical Solutions]

To resolve the issues described above, embodiments of the present invention provide a double-sided induction range system comprising a main body portion, a first induction unit coupled to the main body portion to be hingedly rotatable and heating one side of a double-sided pan for induction by inducing a magnetic field through a first inner side, a second induction unit coupled to the main body portion to be hingedly rotatable and heating the other side of the double-sided pan by inducing a magnetic field through a second inner side, an oil collection bin received inside the main body portion and collecting moisture and oil discharged from the double-sided pan during cooking, and a single control unit electrically connected to each of the first induction unit and the second induction unit.

It is preferable that, when the first induction unit faces vertically upward through a hinge rotation and the first inner surface is positioned perpendicular to the ground, the second induction unit is arranged such that the second inner surface and the first inner surface face with each other, and a heating groove portion receiving the double-sided pan is formed between the first induction unit and the second induction unit.

It is preferable that, when the first induction unit is horizontally arranged by a hinge rotation such that the first inner surface faces vertically upward, the second induction unit is positioned such that an angle between the first inner surface and the second inner surface is between 30 degrees and 90 degrees.

It is preferable that, the first inner surface and the second inner surface include a magnetic field transmission plate.

It is preferable that a separation distance between the first inner surface and the second inner surface is greater than a distance between the one side and the other side of the double-sided pan.

It is preferable that an oil receiving portion receiving the moisture and the oil generated in a cooking material is formed in the double-sided pan, and a linear opening into which the oil receiving portion is inserted and a curved mounting surface stably mounting the double-sided pan on the main body portion are formed on a front surface of the main body portion.

It is preferable that the oil receiving portion is drawn in or out of the main body portion in a sliding manner.

It is preferable that a temperature sensor portion measuring a temperature of the double-sided pan is disposed in at least one of the first induction unit and the second induction unit.

### [Effects of the Invention]

According to the technical solutions of the present invention as described above, various effects including the following may be anticipated. However, the present invention does not require all of the following effects to be achieved.

A double-sided induction range system according to an embodiment of the present invention may reduce cooking time by simultaneously heating both sides of a double-sided induction pan.

Also, a double-sided induction pan may be vertically or horizontally adjusted depending on cooking materials.

In addition, moisture and oil discharged from a double-sided induction pan may be collected to facilitate maintenance and management.

Moreover, a heating intensity or the like of an induction range may be automatically adjusted by providing a recipe for each cooking material such that even cooking is ensured for each cooking material.

### [Brief Description of the Drawings]

FIG. 1 is a perspective view showing a use state of a double-sided induction range system according to one embodiment of the present invention.
FIG. 2 is a front view of FIG. 1.
FIG. 3 is a side view of FIG. 2.
FIG. 4 is a cross-sectional view showing a process in which moisture and oil in a double-sided pan of FIG. 2 are gathered to an oil collection bin.
FIG. 5 is a perspective view of the double-sided induction range of FIG. 1 in a state where a double-sided pan is removed.
FIG. 6 is a view showing a use state of a double-sided induction range system according to another embodiment of the present invention.

### [EMBODIMENTS FOR IMPLEMENTING THE INVENTION]

Preferred embodiments of the present disclosure are described with reference to the appended drawings to enable a sufficient understanding about elements and effects of the present disclosure. However, the present disclosure is not limited to the disclosed embodiments below. Various forms may be obtained, and various modifications can be applied. Below, in describing the present invention, explanation on related known functions may be omitted if it is determined that the known functions are well-known to one having ordinary skill in the art and may obscure essence of the present invention.

Terms, such as "first," "second," etc., may be used herein to describe various elements. However, the elements should not be understood as being limited by these terms. These terms may be only used in distinguishing one element from another. For example, a first element may be referred to as a second element, and, similarly, a second element may be referred to as a first element, without departing from the scope of the present disclosure.

Herein, terms, such as "comprise," "have," etc., are designed to indicate features, numbers, steps, operations, elements, components, or a combination thereof are present. It should be understood that presence of one or more other features, numbers, steps, operations, elements, components, or a combination thereof or a possibility of addition thereof are not excluded.

Terms used herein are only to explain certain embodiments but not to limit the present invention. A singular expression may include a plural expression unless a clearly different meaning can be grasped from the context. Unless defined differently, terms used in embodiments of the present disclosure may be interpreted as generally known terms to one having ordinary skill in the art.

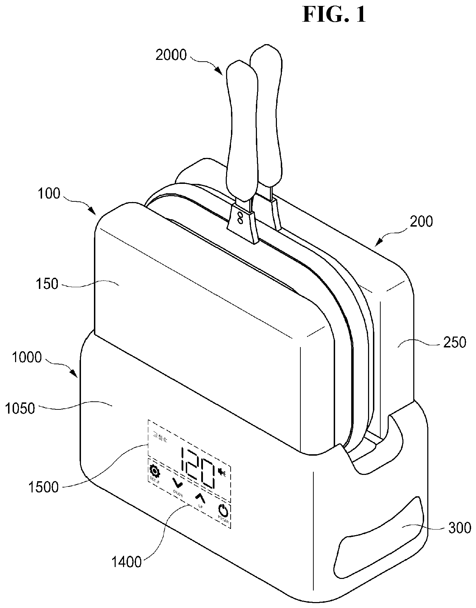

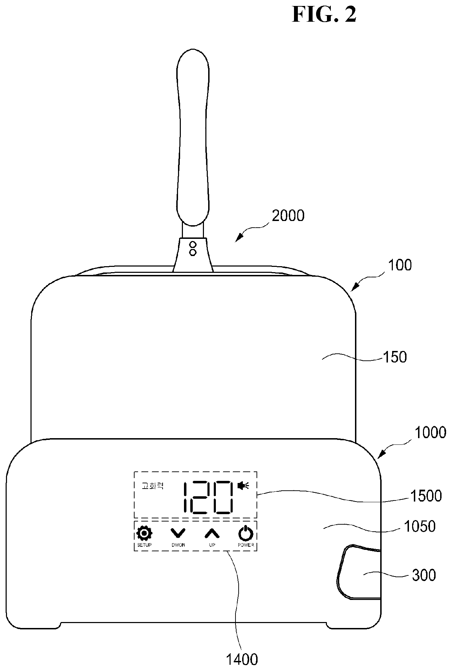

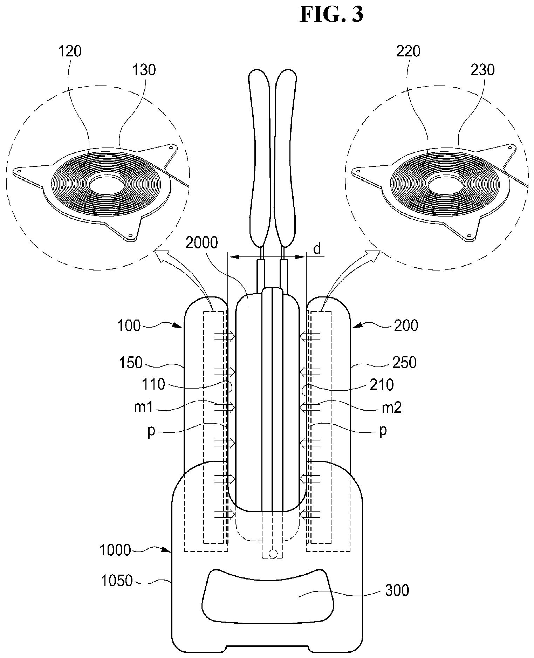

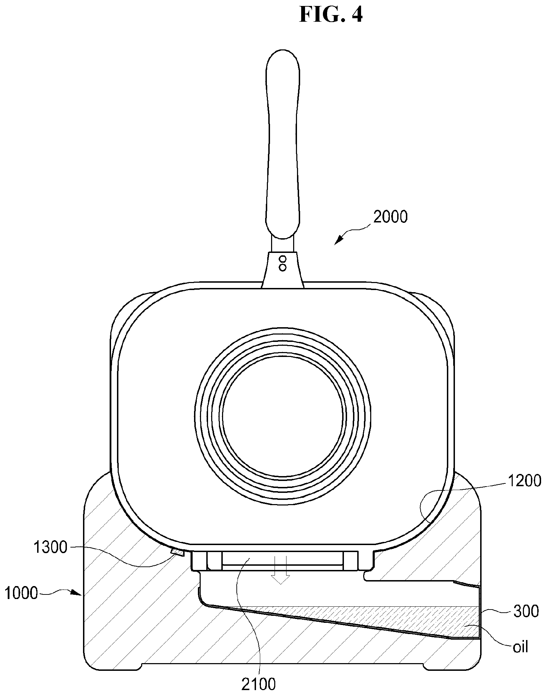

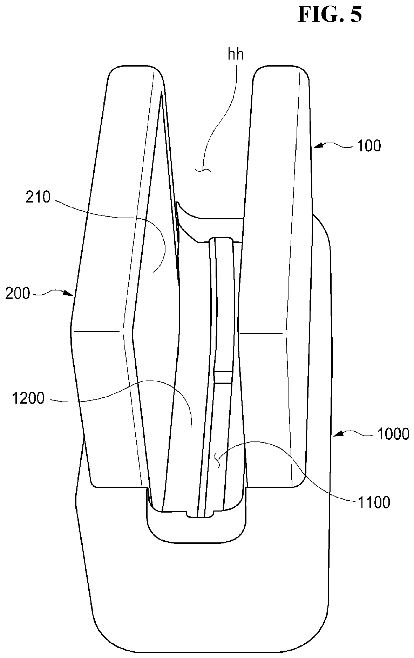

Specific embodiments of the present invention are described in detail with reference to the drawings. FIG. 1 is a perspective view showing a use state of a double-sided induction range system according to one embodiment of the present invention, FIG. 2 is a front view of FIG. 1, FIG. 3 is a side view of FIG. 2, FIG. 4 is a cross-sectional view showing a process in which moisture and oil in a double-sided pan of FIG. 2 are gathered to an oil collection bin, and FIG. 5 is a perspective view of the double-sided induction range of FIG. 1 in a state where a double-sided pan is removed.

Referring to FIGS. 1 to 5, a double-sided induction range system according to an embodiment of the present invention includes a main body portion 1000, a first induction unit 100, a second induction unit 200, an oil collection bin 300, a control unit (not shown), or the like. Here, an embodiment of the present invention may include a double-sided induction pan 2000 with excellent energy efficiency. The double-sided pan 2000 may include, for example, a lower pan, an upper pan rotatably coupled to the lower pan in a shape corresponding to the lower pan, a handle portion installed on the lower pan and the upper pan, respectively, or the like. Additionally, an IH plate (Induction Heating Plate) is further provided on each of the outer surfaces of the lower pan and upper pan such that heat by induction heating of the double-sided induction range may be transferred.

Also, the inner surfaces of the lower pan and upper pan in the double-sided pan 2000 have a concave shape to accommodate cooking materials. Furthermore, the upper pan serves as a cover to prevent heat from escaping during a heating process for cooking. In addition, if the double-sided pan 2000 is rotated 180 degrees so that the upper pan is positioned at the lower side thereof when a cooking material, such as fish, which is particularly difficult to turn over, the upper surface of the cooking material may be directly heated through the upper pan.

Moreover, when the double-sided pan 2000 is heated while the upper pan is sealingly coupled to the lower pan, moisture, oil, oil vapor, etc., are generated from the cooking material inside the double-sided pan 2000. This increases the pressure inside the double-sided pan 2000. Accordingly, for example, a discharge hole which communicates between the inside and outside of the lower pan may be formed at the end of the lower pan. As a result, moisture, oil, oil vapor, etc., may be discharged to the outside of the double-sided pan 2000 through the discharge hole.

Besides, the double-sided pan 2000 according to one embodiment may be provided with an oil receiving portion 2100 which accommodates moisture and oil generated from the cooking material. In the double-sided pan 2000, the hinge rotation is enabled by hinge coupling of the lower pan and the upper pan. In addition, the hinge rotation occurs when a user opens or closes the double-sided pan 2000 using the handle. The oil receiving portion 2100 according to one embodiment may be formed near a location of the hinge coupling.

The main body portion 1000 is arranged so that the double-sided induction range according to an embodiment may be stably positioned on the ground. For instance, the main body portion 1000 may include a main body case 1050 made of synthetic resin. The main body case 1050 may have an external shape including a curved surface.

Meanwhile, the main body portion 1000 may include a single control unit (not shown) electrically connected to each of a printed circuit board on which various electrical and electronic elements are mounted, the first induction unit 100, and the second induction unit 200. In other words, in one embodiment, the first induction unit 100 and the second induction unit 200 may be simultaneously controlled by the only one control unit (not shown). Herein, the control unit (not shown) may control the heating intensity, heating time, etc., with respect to the first induction unit 100 and the second induction unit 200.

Also, the control unit (not shown) may further include a mode switch portion (not shown). At this time, the mode switch portion may switch the first induction unit 100 and the second induction unit 200 from a standby mode to a heating mode. When the double-sided induction range is turned on by pressing a power button, the first induction unit 100 and the second induction unit 200 may be switched from an off mode to the standby mode. At this time, as power for heating is not supplied to the first induction unit 100 and the second induction unit 200, the double-sided pan 2000 may not be heated. Meanwhile, the main body portion 1000 may further include a proximity sensor portion (not shown) which checks whether the double-sided pan 2000 is placed on the double-sided induction range to switch from the standby mode to the heating mode. As a result, when a signal that the double-sided pan 2000 is placed on the double-sided induction range is transmitted to the control unit (not shown) through the proximity sensor portion, the double-sided induction range may be switched from the standby mode to the heating mode.

In addition, the main body portion 1000 may include an input portion 1400, a display portion 1500, a recipe memory portion (not shown), and the like. Meanwhile, the control unit (not shown) may be electrically connected to the input portion 1400, the display portion 1500, the recipe memory portion, etc. First of all, the input portion 1400 may be formed on the front face of the main body portion 1000 as a touch or button type. For example, the user may turn on or off the power of the double-sided induction range by pressing the power button. Also, the user may adjust the heating intensity, the heating time, etc., of the first induction unit 100 and the second induction unit 200 by pressing Up/Down buttons. Also, the display portion 1500 is disposed on the front face of the main body portion 1000 to visually inform the user of an operating status of the double-sided induction range or the like.

Furthermore, the recipe memory portion may store a plurality of recipe modes which have different cooking conditions, cooking sequences, etc., depending on the cooking material. The recipe memory portion is configured to communicate with an external server in a wired or wireless connection. Consequently, the recipe memory portion may periodically update the recipe mode depending on the season, for example. Meanwhile, the control unit (not shown) may control the heating intensity, the heating time, etc., of the first induction unit 100 and the second induction unit 200 according to the recipe mode selected by the user.

In the meantime, a linear opening 1100 and a curved mounting surface 1200 each may be formed on the upper surface of the main body portion 1000. The linear opening 1100 enables the oil receiving portion 2100 of the double-sided pan 2000 to be inserted. Here, the linear opening 1100 is formed in a rectangular shape having a preset width and a preset length on the upper surface of the main body portion 1000. Also, the curved mounting surface 1200 allows the double-sided pan 2000 to be securely mounted on the main body portion 1000. Through this, moisture and oil generated during cooking inside the double-sided pan 2000 may flow downward by gravity and move to the oil receiving portion 2100 through the discharge hole.

The main body portion 1000 may include the oil collection bin 300. The oil collection bin 300 may stored inside the main body portion 1000 and may collect moisture and oil discharged from the double-sided pan 2000 during cooking. The oil collection bin 300, in particular, may be placed vertically below the linear opening 1100. Therefore, the moisture and oil which are moved to the oil receiving portion 2100 may vertically fall from the oil receiving portion 2100 due to gravity and may be collected in the oil collection bin 300. To this end, the oil collection bin 300 may include a container with an open upper surface to receive and store the moisture and the oil falling from the oil receiving portion 2100.

The oil collection bin 300 may be drawn in or out of the main body portion 1000 in a sliding manner. In addition, the bottom surface of the container according to one embodiment may be inclined toward the front face of the oil collection bin 300. Hence, the front portion of the oil collection bin 300 may store moisture and oil more in depth than the rear portion of the oil collection bin 300, which facilitates for the user to draw in or out the oil collection bin 300 or clean the oil collection bin 300.

Also, an overheating detection portion 1300 may be formed on the upper surface of the main body portion 1000. The overheating detection portion 1300 may be formed to be partially exposed in the curved protruding surface 1200. As a result, the overheating detection portion 1300 may directly measure the surface temperature of the double-sided pan 2000 placed on the curved mounting surface 1300. The overheating detection portion 1300 may monitor whether a temperature value of the double-sided pan 2000 exceeds a preset upper overheating limit. When the temperature value measured by the overheating detection portion 1300 exceeds the upper overheating limit, the power supplied to the first induction unit 100 and the second induction unit 200 may be cut off, and the heating mode may be canceled. In consequence, the double-sided induction range according to one embodiment may effectively prevent safety accidents, such as fire, due to overheating.

The first induction unit 100 is hinged and rotatably coupled to the main body portion 1000 and heats one side of the double-sided induction pan 2000 by inducing a magnetic field through the first inner surface 110. The first induction unit 100 may heat one side of the cooking material in the double-sided pan 2000 in an indirect manner by inducing heat to one side of the double-sided pan 2000 using the magnetic field. At this time, the heating direction is m 1. Here, the first inner surface 110 of the first induction unit 100 is preferably formed to have a size (area), which fully includes the size (area) of one side of the double-sided pan 2000. As a result, the first induction unit 100 may evenly heat one side of the double-sided pan 2000 as a whole. In other words, the first induction unit 100 according to one embodiment may entirely heat one side of the double-sided pan 2000 in a surface-to-surface manner.

To this end, the first induction unit 100 may include a circular coil 120, a coil base portion 130, an induction unit case 150, etc. Herein, the circular coil is concentrically wound around the coil base portion in a plurality of times and may have at least one or more layers. Meanwhile, the case accommodates the coil base portion on which the circular coil is wound. Since the first induction unit 100 according to one embodiment is a conventional induction heating method using a circular coil and is a known technology, detailed description is omitted below.

In addition, the first induction unit 100 generally has a plate shape. Also, the first induction unit 100 is hinged to the main body portion 1000, in particular to the upper portion of the main body portion 1000 to be rotated within a preset angle range.

The second induction unit 200 is hinged and rotatably coupled to the main body portion 1000 and heats the other side of the double-sided pan 2000 by inducing a magnetic field through the second inner surface 210. In other words, the second induction unit 200 may heat the other side of the cooking material in the double-sided pan 2000 in an indirect manner by inducing heat to the other side of the double-sided pan 2000 using the magnetic field. At this time, the heating direction is m2. Here, the second inner surface 210 of the second induction unit 200 is preferably formed to have a size (area) which fully includes the size (area) of the other side of the double-sided pan 2000. Consequently, the second induction unit 200 may evenly heat the other side of the double-sided pan 2000 as a whole. In other words, the second induction unit 200 according to one embodiment may completely heat the other side of the double-sided pan 2000 in a surface-to-surface manner.

Meanwhile, the first induction unit 100 and the second induction unit 200 according to one embodiment have shapes, sizes, specifications, etc., which are symmetrical to each other. In other words, the first induction unit 100 and the second induction unit 200 are provided as a pair. As a result, the second induction unit 200 may also include a circular coil 220, a coil base portion 230, an induction unit case 250, etc., like the first induction unit 100. Hereinafter, since the circular coil, etc., has already been described above, detailed description is omitted below. Moreover, the second induction unit 200 according to one embodiment has a typical induction heating method like the first induction unit 100, and detailed description is omitted below.

Also, the second induction unit 200 has a plate shape like the first induction unit 100. Furthermore, the second induction unit 200 is also hinged to the main body portion 1000, in particular to the upper portion of the main body portion 1000 to be rotated within a preset angle range.

The first inner surface 110 and the second inner surface 210 according to one embodiment may include a magnetic field transmission plate (p). Accordingly, the magnetic field generated in the first induction unit 100 may transmit the magnetic field transmission plate (p). Specifically, the magnetic field transmission plate (p) may be made of any material selected from a group of non-magnetic materials, such as marble, wood, and glass. Here, the outer surface of the magnetic field transmission plate (p) is formed as a flat plane and preferably has a thickness in a preset range. At this time, the thickness range of the magnetic field transmission plate (p) may change depending on the material of the magnetic field transmission plate (p).

According to one embodiment, when the first induction unit 100 faces vertically upward by hinge rotation and the first inner surface 110 is positioned perpendicular to the ground, the second induction unit 200 is positioned such that the second inner surface 210 and the first inner surface face with each other. At this time, a heating groove portion (hh) in which the double-sided pan 2000 is accommodated may be formed between the first induction unit 100 and the second induction unit 200.

Also, at this time, it is preferable that a separation distance (d) between the first inner surface 110 and the second inner surface 210 is greater than the distance between the one side and the other side of the double-sided pan 2000. In other words, the first inner surface 110 is disposed opposite to the one side of the double-sided pan 2000 with a predefined gap. Furthermore, the second inner surface 210 is disposed opposite to the other side of the double-sided pan 2000 with a predefined gap.

In addition, at this time, the double-sided pan 2000 is accommodated in the heating groove (hh) while the oil receiving portion 2100 is inserted into the linear opening 1100 and stably placed on the curved mounting surface 1200. In other words, the double-sided pan 2000 may be disposed vertically upward in the heating groove portion (hh), perpendicularly to the ground. Consequently, the first induction unit 100 and the second induction unit 200 may simultaneously and effectively heat both sides of the double-sided pan 2000.

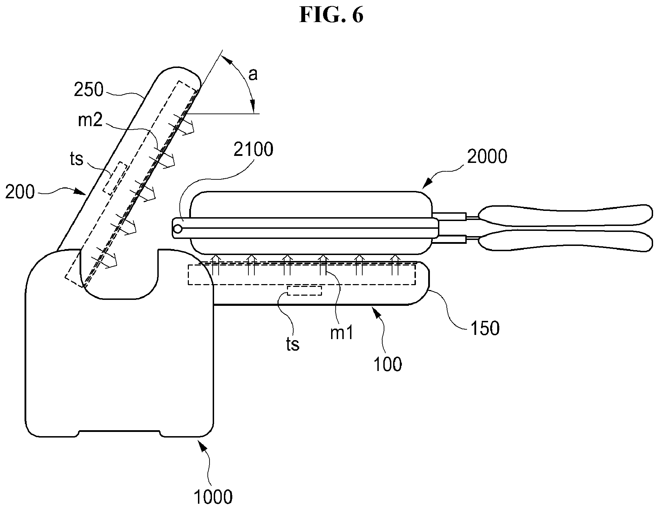

FIG. 6 is a view showing a use state of a double-sided induction range system according to another embodiment of the present invention. Referring to FIG. 6, when the first induction unit 100 is horizontally arranged by the hinge rotation such that the first inner surface 110 faces vertically upward, the second induction unit 200 may be positioned such that the first an angle (a) between the first inner surface 110 and the second inner surface 210 is between 30 degrees and 90 degrees.

The first induction unit 100 may be stably fixed in a horizontal state by a stopper or the like. When the first induction unit 100 is horizontally disposed, the double-sided pan 2000 may be placed such that one side of the double-sided pan 2000, for example, a lower pan, is seated on the upper surface of the first inner surface 110. Here, the double-sided pan 2000 is preferably arranged such that the oil receiving portion 2100 is positioned in an upper space of the linear opening 1100 formed at the upper surface of the main body portion 1000.

In this state, the second induction unit 200 may be hingedly rotated by a predetermined angle so that the second inner surface 210 faces the first induction unit 100, which takes into consideration a case where the cooking material is mainly cooked by the bottom surface in accordance with a recipe mode and providing low heat to the top surface is sufficient.

Moreover, a temperature sensor portion (ts) which measures the temperature of the double-sided pan 2000 may be disposed in at least one of the first induction unit 100 and the second induction unit 200. The temperature sensor portion (ts) may measure the temperature of the double-sided pan 2000 in real time. The temperature sensor portion (ts) allows the material to be cooked at a cooking temperature which matches the recipe mode. Meanwhile, the temperature measured by the temperature sensor portion (ts) is displayed through the display portion 1500, which may be observed by the user. Furthermore, the control unit (not shown) may control the heating intensity, the heating time, or the like of the first induction unit 100 and the second induction unit 200 based on the temperature input through the temperature sensor portion (ts).

In the above, preferred embodiments of the present invention have been described by way of examples, but the scope of the present invention is not limited to these specific embodiments and may be appropriately modified within the scope recited in the claims.

## Claims

1. A double-sided induction range system comprising:
a main body portion;
a first induction unit coupled to the main body portion to be hingedly rotatable and heating one side of a double-sided pan for induction by inducing a magnetic field through a first inner side;
a second induction unit coupled to the main body portion to be hingedly rotatable and heating the other side of the double-sided pan by inducing a magnetic field through a second inner side;
an oil collection bin received inside the main body portion and collecting moisture and oil discharged from the double-sided pan during cooking; and
a single control unit electrically connected to each of the first induction unit and the second induction unit.

2. The double-sided induction range system of claim 1, **characterized in that**, when the first induction unit faces vertically upward through a hinge rotation and the first inner surface is positioned perpendicular to the ground, the second induction unit is arranged such that the second inner surface and the first inner surface face with each other, and
a heating groove portion receiving the double-sided pan is formed between the first induction unit and the second induction unit.

3. The double-sided induction range system of claim 1, **characterized in that**, when the first induction unit is horizontally arranged by a hinge rotation such that the first inner surface faces vertically upward,
the second induction unit is positioned such that an angle between the first inner surface and the second inner surface is between 30 degrees and 90 degrees.

4. The double-sided induction range system of claim 1, **characterized in that** the first inner surface and the second inner surface include a magnetic field transmission plate.

5. The double-sided induction range system of claim 2, **characterized in that** a separation distance between the first inner surface and the second inner surface is greater than a distance between the one side and the other side of the double-sided pan.

6. The double-sided induction range system of claim 1, **characterized in that** an oil receiving portion receiving the moisture and the oil generated in a cooking material is formed in the double-sided pan, and
a linear opening into which the oil receiving portion is inserted and a curved mounting surface stably mounting the double-sided pan on the main body portion are formed on a front surface of the main body portion.

7. The double-sided induction range system of claim 1, **characterized in that** the oil receiving portion is drawn in or out of the main body portion in a sliding manner.

8. The double-sided induction range system of claim 1, **characterized in that** a temperature sensor portion measuring a temperature of the double-sided pan is disposed in at least one of the first induction unit and the second induction unit.
